# EUROPÄISCHE PATENTANMELDUNG

(11) **EP 1 396 648 A1**
(43) Veröffentlichungstag der Anmeldung: **10.03.2004**
(21) Anmeldenummer: 03019347.8
(22) Anmeldetag: 27.08.2003
(51) Int. Cl.: F16B 37/04

(54) **Nutenstein**

(30) Priorität: 30.08.2002 DE 10240793
(71) Anmelder: GROB-Werke Burkhart Grob e.K., 87719 Mindelheim (DE)
(72) Erfinder: Lutzenberger, Franz, 87775 Salgen (DE); Groitl, Werner, 87778 Stetten (DE)
(74) Vertreter: Schulz, Manfred, Dipl.-Ing. (FH)

(57) **Zusammenfassung**

Die Erfindung betrifft einen Nutenstein (1) für das Befestigen von beliebigen Bauteilen an C- oder U-Profilschienen (2). Der Nutenstein (1) weist einen in die Schiene eintauchenden Klemmkörper (3) auf, an welchen ein Befestigungsschaft (10) anschließt, der aus der Schienenöffnung (21) hervorsteht. Der Klemmkörper weist mehrere Klemmflächen (31,32) auf, die ein Festlegen durch Verklemmen des Nutensteines in unterschiedlichen Profilschienen erlaubt.

## Beschreibung

Die Erfindung betrifft einen Nutenstein für das Befestigen von beliebigen Bauteilen an C - oder U - Profilschienen, wobei der Nutenstein einen in die Schiene eintauchenden Klemmkörper aufweist, an welchem ein Befestigungsschacht anschließt, der aus der Schienenöffnung hervorsteht und zur Verbindung mit dem Bauteil dient.

Der Einsatz von Nutensteinen zum Befestigen von beliebigen Bauteilen an C - oder U - förmigen Profilschienen ist in der Technik hinlänglich bekannt. Der große Vorteil einer solchen Ausgestaltung liegt darin, daß der Nutenstein an jeder beliebigen Stelle entlang der Schiene anbringbar und dort auch festklemmbar ist. Das C - oder U - Profil der Schiene bildet eine Schienenöffnung, durch welche der Befestigungsschaft hervorsteht. Dieser kann zum Beispiel eine Bohrung mit Gewinde aufweisen, zum Eindrehen von entsprechenden Schrauben, um somit ein Bauteil zu befestigen. Alternativ kann vorgesehen sein, an dem Schaft in anderer geeigneter Weise ein Bauteil zu befestigen.

Nun kennt der Markt eine Vielzahl von unterschiedlichen Schienen, die sich insbesondere in der genauen Deminsionierung des C - oder U - Profiles unterscheiden. Die verschiedenen Hersteller (z.B. von Firma Profilex, Bosch oder Item) bieten zu ihren jeweiligen Profilschienen auch nur für diese passende Nutsteine an. Die Austauschbarkeit zwischen diesen verschiedenen Systemen ist entsprechend gering, wodurch sich ergibt, daß der Montageaufwand oftmals sehr stark erhöht ist, wenn an einer entsprechenden Anlage unterschiedliche C - oder U - Profilschienen verbaut sind und an diesen entsprechende Bauteile zu befestigen sind.

Aus verschiedenen bekannten Druckschriften sind Befestigungselemente bekannt, die beispielsweise aus einem in eine Schiene eintauchenden Klemmkörper bestehen. Dabei ist aus der Druckschrift DE 17 59 106 B eine Lösung bekannt, die sich durch ein einteiliges Befestigungsstück auszeichnet, wobei der zylindrische Schaft auf diametral gegenüberliegenden Seiten Abflachungen aufweist, die parallel zu seiner Längsachse verlaufen. Der zylindrische Schaft des Befestigungsstücks hat dabei Abflachungen, die dem Sichern des Befestigungsstückes beispielsweise in einem Holzrahmen gegen Verdrehen dienen. Das Befestigungsstück weist einen Kopf auf, der in Längsrichtung gesehen der Breite der Öffnung der Profilschiene entspricht. Durch Verdrehen wird dieser Befestigungskopf in eine Stellung gedreht, in der er breiter ist als die Breite der Öffnung der Profilschiene. Dadurch erfolgt eine Arretierung der Profilschiene auf dem Befestigungsstück nur durch Drehen des Kopfes um 90°. Dabei ist es allerdings erforderlich, daß ein Gegenhalter vorhanden ist, der senkrecht zur Längsachse des Schaftes des Befestigungsstückes liegt. Dieser Gegenhalter ist dabei ebenfalls breier ausgeführt als die Weite der Öffnung der Profilschiene. Der Kopf des Befestigungsstückes wirkt dabei wie ein Flansch, der gegen die Teile des Metallrahmens drückt.

Aus der Druckschrift DE 40 34 838 ist ein Befestigungselement bekannt, dessen hammerförmiger Kopf durch Verdrehen in eine Hinterschneidung beziehungsweise eine Hinterschneidungsnut eingreift. Mittels konisch zulaufender Anlageflächen wird der Kopf zwischen der Oberseite und der Unterseite der Hinterschneidung eingeklemmt. Auch hier ist ein Gegenhalten beziehungsweise ein Gegenlager erforderlich. Dies wird durch Verdrehung des Arretierungselementes in einem Distanz- beziehungsweise Verbindungselement erreicht. Dadurch werden die Flächen des Kopfes des Befestigungselementes an die die Nut aufweisenden Innenflächen des Profiles gedrückt, wodurch das Profil dann fixiert wird.

Die Druckschrift DE 27 25 637 A1 offenbart ein Verbindungssystem für Gerüststangen, wobei ein T-förmiges Element in einem längslaufenden Schlitz einer Gerüststange einsetzbar ist. Das T-förmige Element weist eine in Längsrichtung verlaufende Bohrung auf, durch die eine Schraube hindurchragt. Durch Festschrauben der Schraube wird der Quersteg des T's gegen Flansche des Schlitzes gepreßt und so befestigt. Das T-förmige Element weist dabei eine Verdrehsicherung auf. Auch hier ist wieder das Prinzip eines nicht am Befestigungselement befestigten Gegenlagers angewendet, was den Herstellungsaufwand für derartige Befestigungselemente erhöht.

Aus der Druckschrift CH 5 80 210 A5 ist ein Verbindungselement bekannt, bei dem die Klemmflächen dem Befestigungsschaft zugewandt sind und auch hier die Flansche des Profils zwischen diesen Schrägflächen und einem Gegenlager ähnlich der Lösung nach der Druckschrift DE 17 59 106 B eingeklemmt werden. Aus der Druckschrift US 43 15 393 ist ein Klemmkörper bekannt, der ebenfalls ein äußeres Widerlager benötigt, gegen den der Klemmkörper gepreßt werden muß. Es sind weiterhin federnde Beinchen vorgesehen, die den Klemmkörper mit dort vorgesehenen Flächen gegen schräge Seitenwände eines U-förmigen Kanals drücken. Ein derartiges Element könnte beispielsweise in einem U-förmigen Kanal mit zueinander parallel angeordneten Seitenwänden keinen Halt finden. Diese Lösung ist demnach nicht geeignet, unversell in unterschiedlichen Profilsystemen eingesetzt zu werden, sondern nur für spezielle Ausführungsformen geeignet.

Aus den Druckschriften US 39 08 330 und US 27 62 398 sind ebenfalls Lösungen bekannt, die Klemmkörper mit federnden Elementen aufweisen, die in Hinterschneidungen eingreifen können. Die Klemmkörper werden mittels einer Schraube gegen eine Anlagefläche gepreßt.

Auch aus den Druckschriften US 2,745,156 und US 2,531,351 sind Befestigungsmittel bekannt, die der Befestigung von Abdeckungen, Hohlprofilen oder dergleichen auf bestimmten Untergründen dienen. Auch hierbei erfolgt die Befestigung mittels Befestigungsschrauben, die das Befestigungsmittel in Art eines Flansches gegen das Profil drücken. An den Flanschen sind dabei Sicherungsstücke vorgesehen, die den Flansch gegen ein Verdrehen im Profil sichern. Auch diese Lösungen sind gekennzeichnet durch die Anwendung des Prinzips des Andrückens an ein weiteres Gegenlager, wodurch der herstellungstechnische und montagetechnische Aufwand bei dem späteren Einsatz des Befestigungsmittels erhöht ist. Eine universelle Einsetzbarkeit an unterschiedlichen Profilsystemen ist auch nach den beiden zuletzt genannten bekannten Lösungen aus dem Stand der Technik nicht ermöglicht.

Die zuvor beschriebenen bekannten Druckschriften zeichnen sich dadurch aus, daß sie ein gemeinsames Merkmal aufweisen, nämlich derart, daß die Befestigung nicht in der Schiene allein, sondern zwischen Klemmkörper und einem zusätzlichen, meist außen angeordneten Gegenlager erfolgt.

Ausgehend von dem bekannten Stand der Technik ist es Aufgabe der Erfindung, einen Nutenstein, wie eingang beschrieben, dahingehend zu verbessern, daß dieser universell in unterschiedlichen Profilsystemen einsetzbar ist und insbesondere ohne ein zusätzliches Gegenlager in den unterschiedlichen Profilsystemen beziehungsweise Schienen und ohne eine zusätzliche Fixierung au s kommt .

Die Erfindung geht von dem zuvor beschriebenen Stand der Technik aus und schlägt einen Nutenstein für das Befestigen von beliebigen Bauteilen an C- oder U-Profilschienen vor, wobei der Nutenstein einen in die Schiene eintauchenden Klemmkörper aufweist, an welchen ein Befestigungsschaft anschließt, der aus der Schienenöffnung hervorsteht und zur Verbindung mit dem Bauteil dient, welcher sich dadurch auszeichnet, daß der Klemmkörper derart ausgebildet ist, daß er in unterschiedlichen Profilschienen allein durch ein Verklemmen festlegbar ist. Dadurch, daß der Klemmkörper allein durch ein Verklemmen in den Profilschienen festlegbar beziehungsweise fixierbar ist, wird der fertigungstechnische Aufwand für die Erstellung eines zusätzlichen Gegenlagers an den Klemmkörpern eingespart. Der Klemmkörper ist an jeder Stelle der Profilschiene fixierbar und dadurch sehr universell einsetzbar. So ist es beispielsweise gegeben, den Klemmkörper zunächst an einer vorbestimmten Stelle zu positionieren und zu klemmen und dann das zu befestigende Bauteil dort anzuordnen. Dabei ist insbesondere die Montage von Bauteilen erleichtert, die an mehreren Punkten an einer Profilschiene zu fixieren sind. Auch eine Nachjustierung ist durch die erfindungsgemäße Ausführung des Nutensteines erheblich erleichtert.

Entsprechend einer vorteilhaften Weiterbildung der Erfindung ist es vorgesehen, daß der Klemmkörper wenigstens eine Klemmfläche an wenigstens einem Endbereich aufweist, mittels derer das Festlegen des Nutensteins in unterschiedlichen Profilschienen erfolgt. Die Klemmflächen an dem Klemmkörper können beispielsweise als Abflachungen oder Abschrägungen an wenigstens einem der Endbereiche des Klemmkörpers vorgesehen sein. Bei einer einseitig länglichen Ausbildung des Klemmkörpers ist beispielsweise eine seitliche Verklemmung an nur einer Seite des Profiles möglich. Selbstverständlich ist es auch vorgesehen, daß beidseitig geklemmt werden kann, wobei zu beachten ist, daß dann der Klemmkörper in seiner Längsausdehnung etwas mehr als der Breite der Innenöffnung des Profiles entspricht, so daß ein Anlegen beider Endbereiche an beiden Seitenwandungen erfolgen kann.

Entsprechend einer vorteilhaften Weiterbildung der Erfindung ist es demnach vorgesehen, daß der Klemmkörper mittels wenigstens einer Klemmfläche an wenigstens einer der Seitenwandungen des Profils festlegbar ist.

Die Erfindung zeichnet sich auch dadurch aus, daß neben der ersten Klemmfläche eine zweite Klemmfläche vorgesehen ist. Die zweite Klemmfläche ist dabei an dem gleichen Endbereich beziehungsweise der gleichen Seite des Klemmkörpers vorgesehen. Sie kann beispielsweise dadurch gebildet werden, daß eine Abschrägung an der nach unten weisenden Seite des Klemmkörpers vorgesehen ist, die beispielsweise der Form der Innenöffnung des Profils entspricht, um ein Festklemmen des Klemmkörpers noch besser zu ermöglichen.

Ein weiterer Aspekt der Erfindung ist dadurch angegeben, daß der Klemmkörper länglich ausgebildet ist, in seinem Mittelbereich sich der Befestigungsschaft anschließt, wobei zwei Endbereiche des Klemmkörpers vorgesehen sind und zumindest ein Endbereich des Klemmkörpers Klemmflächen aufweist.

Die verschiedenen, am Markt befindlichen Profilschienen unterscheiden sich im Hinblick auf Breite (Abstand der Seitenwandungen), Weite der Öffnung und Tiefe. Dabei sind Profilschienen bekannt, deren Schienenboden im Zusammenwirken mit den nach innen vorstehenden Flanschen des C-Profiles mit dem Nutenstein zusammenwirken, und der Nutenstein am Boden und an den nach innen vorstehenden Flanschen festgeklemmt wird.

Daneben existieren Profilschienen, bei welchen der Nutenstein derart verklemmt wird, daß die seitlichen Endbereiche des Klemmkörpers mit den Seitenwandungen der Schiene klemmend zusammenwirken. Eine Weiterbildung des erfindungsgemäßen Vorschlags zielt nun darauf ab, an dem Klemmkörper mehrere Klemmflächen vorzusehen, um den unterschiedlichen Typen der Profilschienen in unterschiedlichen Klemmsystemen entsprechend Rechnung zu tragen.

Wird aber ein solcher Klemmkörper geschaffen, der es erlaubt, daß dieser in verschieden ausgestalteten C - oder U - Profilschienen sicher zu einer Verklemmung eingesetzt werden kann, so wird ein Nutenstein, der mit einem entsprechenden Klemmkörper ausgestaltet ist, in verschiedenen Schienen befestigbar sein und so unabhängig von dem Profilschienentyp, einsetzbar sein. Die Vorratshaltung reduziert sich entsprechend, aber auch der Montageaufwand wird reduziert, da sicher immer der richtige, weil universell passende Nutenstein zur Verfügung steht.

Es ist vorgesehen, daß der Klemmkörper maximal eine Breite besitzt, die der Weite der Schienenöffnung beziehungsweise etwas mehr als der Weite entspricht. Dabei ist die Länge des Klemmkörpers so bemessen, daß der Klemmkörper in der Schiene neben der Schienenöffnung durch Verschwenkung des Nutensteins um die Längsachse des Schaftes festklemmbar ist. Dabei ist es von Vorteil, daß der Nutenstein allein durch ein Verklemmen der Klemmflächen in der Profilschiene festlegbar ist. Auf eine hohe Maßgenauigkeit der Profilschiene kommt es dabei nicht an, da die Abmessung der Schienenöffnung und der Breite des Nutensteines so gewählt ist, daß sich dieser, wenn er an der Klemmfläche anliegt, auf der gegenüberliegenden Seite eine entsprechende Anlagestelle in der Schiene sucht und so sich auch bei verhältnismäßig hoher Toleranzen festklemmt. Dabei ist die Montagefolge derart, daß zunächst der Nutenstein in der Schiene festgelegt wird und erst hernach auf dem zur Verfügung stehenden Befestigungsschaft das entsprechende Bauteil, zum Beispiel Kabelschellen oder dergleichen, befestigt werden.

Daher kommt es auf die Anordnung des Bauteiles zum Befestigen des Nutensteins in der Schiene nicht an, der Klemmkörper selber erreicht eine Fixierung des Nutensteins in der Schiene. Dabei ist es ausreichend, wenn der Klemmkörper wenigstens an einer Seitenwandung des Profiles anliegt und klemmt.

In einer bevorzugten Ausgestaltung der Erfindung ist vorgesehen, daß der Klemmkörper eine dem Schienenboden zugewandte Unterseite besitzt und eine erste Klemmfläche durch eine Abwinkelung der Unterseite und eine zweite Klemmfläche durch eine Abwinkelung der Seitenfläche des Klemmkörpers gewonnen wird. So wird in einfacher Weise den verschiedenen Schienensystemen Rechnung getragen. Wird ein Schienentyp verwendet, bei welchem die Festklemmung zwischen Schienenboden und den die Schienenöffnung begrenzenden Schienenleisten realisiert wird (beispielsweise C - Profile aber auch bei U - Profile einsetzbar), so werden die an der Unterseite durch eine Abwinkelung gewonnenen ersten Klemmflächen aktiv.

Der Einsatz eines C - Profiles ist insbesondere wegen der exakteren Auflage entlang einer Kante bei dieser Variante gegebenenfalls zu bevorzugen.

Sollte der gleiche Nutenstein aber in einem Profilschienentyp eingesetzt werden, bei welchem der Klemmkörper in den einander gegenüberliegenden Schienenseitenwandungen festgeklemmt wird, so werden die durch eine Abwinkelung der Seitenfläche des Klemmkörpers gewonnen zweiten Klemmflächen aktiv. Es ist aber auch möglich, daß die Klemmfläche auf der Oberseite des Klemmkörpers angeordnet ist und mit einem entsprechend ausgebildeten Leistenbereich der Schiene haltend zusammenwirkt.

Es ist von Vorteil, wenn der Klemmkörper quader- oder zylinderförmig ausgebildet ist. Solche Körper sind einfach herstellbar, an diesen können in einfacher Weise durch Abstechen und Abfräsen die jeweiligen Klemmflächen gewonnen werden. Es können aber auch beliebig anders gestaltete Körper eingesetzt werden, sie müssen allerdings in jedem Fall in der Schiene bewegbar und durch die Schienenöffnung, rechtwinkelig zur Längserstreckung der Schiene, in diese einsetzbar sein.

In einer bevorzugten Ausgestaltung der Erfindung ist vorgesehen, daß der Klemmkörper auf der Unterseite einen Stopfen oder Kugelbolzen trägt, der im eingebauten Zustand des Nutensteins in der Schiene auf dem Schienenboden anliegt. Bevorzugt wird hierbei dieser Stopfen oder Kugelbolzen in gewisser Weise elastisch, z.B. federgelagert ausgeführt, wodurch bereits beim Einbauen des Nutensteins in die Schiene erreicht wird, daß der Klemmkörper nicht vollflächig auf dem Schienenboden aufliegt, sondern einen gewissen Abstand hiervon aufweist. Dies ist zum Beispiel bei einer Vormontage für Justierarbeiten von Vorteil, weil entgegen der elastischen Kräfte des Stopfens oder Kugelbolzens der Nutenstein in der Schiene festlegbar aber noch nicht festklemmbar ist.

Es ist günstig, wenn der Befestigungsschaft eine Kappe trägt. Die Kappe, die gegebenenenfalls ebenfalls aus elastischem Material wie Elastomere oder dergleichen bestehen kann, hat insbesondere den Vorteil, daß es auf eine exakte Positionierung des Nutensteins für die Anordnung des Bauteiles nicht ankommt. Insbesondere wenn ein Bauteil mit mehreren Nutensteinen zu befestigen ist und das jeweilige Achsmaß der Befestigungspunkte relevant ist, können entsprechende Maßtoleranzen durch die elastische Kappen kompensiert werden.

Es ist vorgesehen, daß die Kappe und/oder der Stopfen aus einem elastischen Material, insbesondere einem Kunststoff oder Elastomere besteht, wobei Elastomere auch spritzbar sind und daher günstig herstellbar.

Erfindungsgemäß wurde gefunden, daß es von Vorteil ist, wenn der Befestigungsschaft des Nutensteines und/oder die Kappe als zylinderförmiges Vieleck beziehungsweise als Zylinder mit einem vieleckigen Querschnitt ausgebildet ist beziehungsweise sind. Dies bietet die Möglichkeit eines einfachen Verdrehens des Nutensteines in der Nut des Profiles. Die Ausbildung als Vieleck ist dabei besonders vorteilhaft, da dadurch der Einsatz unterschiedlicher Werkzeuge beziehungsweise ein Fixieren von Hand sogar ermöglicht ist.

Erfindungsgemäß wurde weiterhin gefunden, daß es von Vorteil ist, wenn der Befestigungsschaft zwischen dem Klemmkörper und dem oberen Ende des Schaftes eine Verjüngung aufweist, die vorzugsweise der Weite der Schienenöffnung entspricht.

Eine vorteilhafte Weiterbildung des erfindungsgemäßen Nutensteines zeichnet sich auch dadurch aus, daß in beziehungsweise an dem Befestigungsschaft ein Befestigungsmittel, vorzugsweise eine Bohrung mit einem Innengewinde anordenbar ist. In dieser Bohrung kann dann beispielsweise, nachdem der Nutenstein an seiner Befestigungsstelle vorgesehen ist, das Bauteil mittels einer Befestigungsschraube befestigt werden.

In der zeichnung ist die Erfindung schematisch gezeigt. Es zeigen:
- Fig. 1a, 2a: in einer Schnittdarstellung zwei verschiedene Varianten der Erfindung;
- Fig. 1b, 2b: eine Draufsicht nach Fig. 1a, 2a;
- Fig. 3a, 3b, 3c: in einer Schnittansicht (Fig. 3a) sowie zwei Ansichten der erfindungsgemäße Nutenstein;
- Fig. 4a, 4b, 4c: in einer Schnittdarstellung (Fig. 4b) und zwei weiteren Ansichten ein Detail der Erfindung und
- Fig. 5a, 5b, 5c: in einer Schnittdarstellung (Fig. 5b) und zwei weiteren Ansichten ein weiteres Detail der Erfindung.

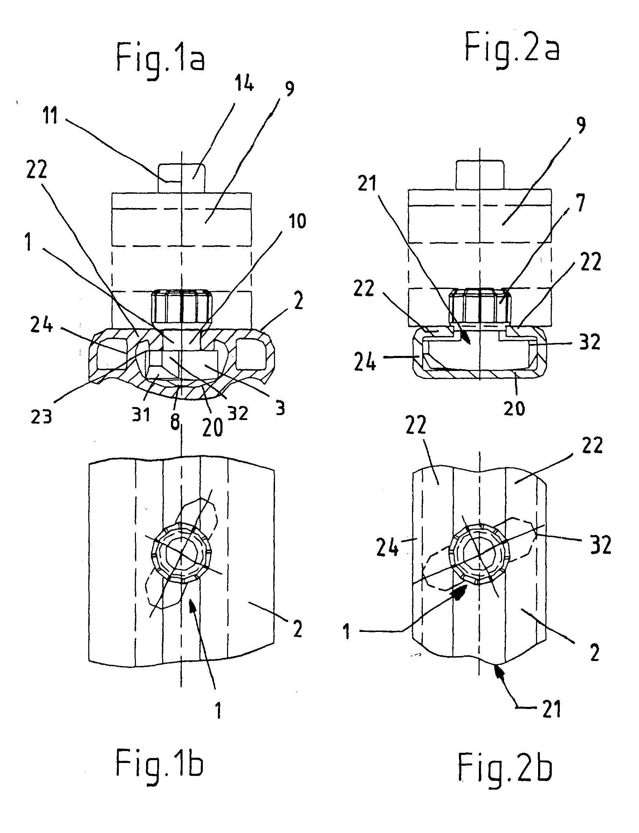

Die Fig. 1a, 2a zeigen einen möglichen Einsatzbereich des erfindungsgemäßen Nutensteines 1. In der Schnittdarstellung nach Fig. 1a, 2a ist der Nutenstein 1 in einer Profilschiene 2 eingesetzt, schematisch ist das zu befestigende Bauteil 9 angedeutet. Zwischen Bauteil 9 und Schiene 2 befindet sich der Nutenstein 1. Die in Fig. 1a beziehungsweise 2a gezeigten Profilschienen unterscheiden sich in ihrem Klemmsystem.

In Fig. 1a ist die im Wesentlichen C-förmig ausgebildete Profilschiene von einem rinnenartigen Schienenboden 20 gebildet, wo sich am oberen Ende, die Schienenöffnung 21 beschränkende Schienenleisten 22 noch nach unten vorstehende Flansche 23 anschließen. Diese Flansche 23 bilden beim Festklemmen des Nutensteines 1 in der Profilschiene 2 ein zusätzliches Widerlager. Ein Widerlager außerhalb der Profilschine 2 ist nicht erforderlich. Beim Festklemmen wirken erste Klemmflächen 31 an den Nutenstein 1 mit dem rinnenartigen Schienenboden 20 zusammen und pressen die Oberseite des Nutensteines gegen die nach innen vorstehenden Flansche 23. So wird der Nutenstein festgeklemmt.

Das in Fig. 2a gezeigte Prinzip der Festklemmung funktioniert hingegen anders. Das hier verwendete Schienenprofil weist zwar auch eine die Schienenöffnung 21 beschränkende Leiste 22 auf, jedoch ist dieser Schienentyp zum Beispiel als Doppel-U-förmig oder U-förmig ausgebildet bezeichnet, um insbesondere auf die Abwesenheit des Flansches 23 in der Profilschiene 2 hinzuweisen. Hier findet eine Festklemmung des Nutensteines 1 an den beiden gegenüberliegenden Seitenwandungen 24 statt. Die Seitenwandungen 24 verbinden dabei den Schienenboden 20 mit den die Schienenöffnung 21 beschränkenden Leisten 22. Bei einem Verdrehen des Nutensteines 1 um die Drehachse 11 werden die zweiten Klemmflächen 32 gegen die Seitenwandungen 24 geführt, wobei die einander gegenüberliegenden Seitenwandungen 24 entsprechende Widerlager bilden.

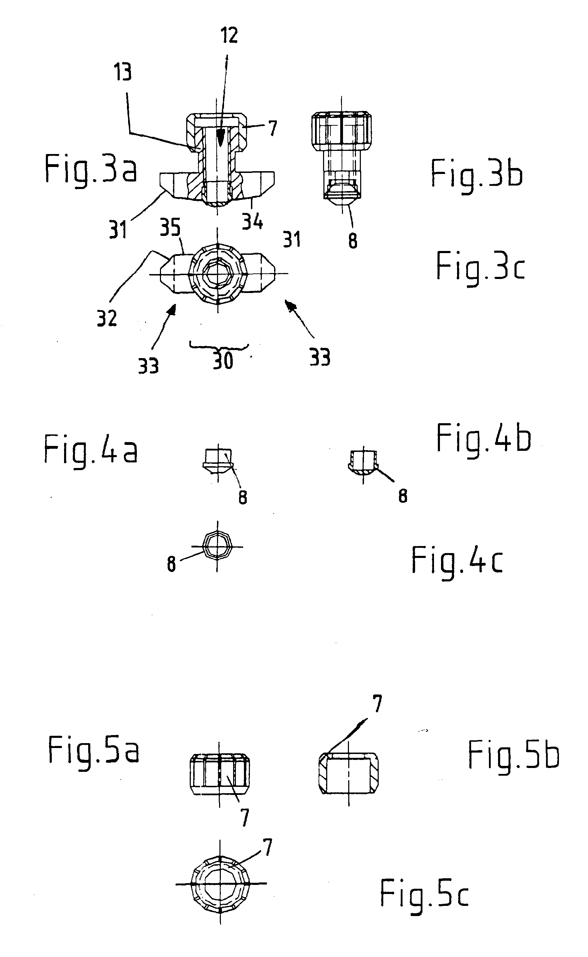

Der Nutenstein 1 ist insbesondere in Fig. 3a dargestellt. Er besteht aus dem in die Schiene eintauchenden Klemmkörper 3, der schiffchenartig oder länglich ausgebildet ist, wobei sich in dessen Mittelbereich 30 der Befestigungschaft 10 nach oben hin anschließt. Der Befestigungsschaft 10 taucht aus der Schienenöffnung 21 heraus und dient zum Befestigen beliebiger Bauteile 9. Hierzu ist zum Beispiel eine Bohrung 12 vorgesehen, in der ein Gewinde 13 eingeschnitten ist und welche zur Aufnahme von entsprechenden Befestigungsschrauben ausgebildet ist.

Der Klemmkörper 3 ist bevorzugt länglich ausgebildet, wobei beispielsweise eine Quader- oder Zylinderform gewählt sein kann. Die ersten Klemmflächen 31 werden an dem Klemmkörper 3 durch eine Abwinkelung der Unterseite 34 in den Endbereichen 33 gewonnen.

In Fig. 3c, einer Unteransicht des Nutensteines 1, ist zu erkennen, wie die zweiten Klemmflächen 32 durch eine Abwinkelung oder Abstechen der Seitenfläche 35 an dem Klemmkörper 3 gewonnen werden. Durch diese spezielle Ausgestaltung, insbesondere des Endbereiches 33 des erfindungsgemäßen Nutensteines 1, wird ein unabhängig von der speziellen Ausgestaltung der Profilschiene 2 einsetzbarer Nutenstein vorgeschlagen, die die ansonsten aufwendigen Montagearbeiten insbesondere bei der Verbauung unterschiedlicher Profilschienentypen zuverlässig vermeidet.

In Fig. 4a, 4b, 4c ist der Stopfen 8 gezeigt, der die Bohrung 12 auf seiner Unterseite verschließt. Er dient dazu den Nutenstein 1 im in die Schiene 2 eingesetzten Zustand ein wenig gegen diese zu pressen und so bereits zu fixieren, zum Beispiel für Justagearbeiten, wenn ein Verklemmen noch nicht gewünscht ist.

Fig. 5a, 5b, 5c zeigen eine Kappe 7, die auf dem Befestigungsschaft aufsteckbar ist und über welchen das Bauteil 9 auf dem Befestigungsschaft 10 ruht. Auch ist es günstig, wenn diese Kappe 7 aus Elastomeren besteht, um dadurch zum Beispiel Maßungenauigkeiten bei variablen Achsabständen auszugleichen.

Grundsätzlich ist es von Vorteil, wenn ein Verklemmen des Nutensteines 1 in der Profilschiene 2 nur entlang einer Kante erfolgt. Deswegen ist zum Beispiel bei der Ausgestaltung nach Fig. 1a, 1b der Schienenboden rinnenartig ausgebildet, um bei einem Verdrehen des Nutensteines 1 um die Drehachse 11 (welche parallel zur Schafterstreckung läuft) nur eine konkrete Anliegekante zu schaffen und so ein sicheres Festklemmen des Nutensteines 1 in der Profilschiene 2 zu erreichen.

Das gleiche Prinzip wird aber auch in einem Profilesystem nach Fig. 2a, 2b realisiert, wie es zum Beispiel in Fig. 2b rechts gut angedeutet ist, wo die Klemmfläche 32 an der Seitenwandung 24 in Anlage kommt. Durch die eindeutige Auflage wird ein sicheres Klemmen erreicht.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Nutenstein für das Befestigen von beliebigen Bauteilen an C - oder U - Profilschienen, wobei der Nutenstein einen in die Schiene eintauchenden Klemmkörper aufweist, an welchem ein Befestigungsschaft anschließt, der aus der Schienenöffnung hervorsteht und zur Verbindung mit dem Bauteil dient, **dadurch gekennzeichnet, daß** der Klemmkörper (3) derart ausgebildet ist, daß er in unterschiedlichen Profilschienen (2) allein durch ein Verklemmen festlegbar ist.

2. Nutenstein nach Anspruch 1, **dadurch gekennzeichnet, daß** der Klemmkörper (3) wenigstens eine Klemmfläche (32) an wenigstens einem Endbereich (33) aufweist, mittels derer das Festlegen des Nutensteins (1) in unterschiedlichen Profilschienen (2) erfolgt.

3. Nutenstein nach einem oder beiden der vorhergehenden Ansprüche, **dadurch gekennzeichnet, daß** der Klemmkörper (3) mittels wenigstens einer Klemmfläche (32) an wenigstens einer der Seitenwandungen (24) der Profilschiene (2) festlegbar ist.

4. Nutenstein nach einem oder mehreren der vorhergehenden Ansprüche, **dadurch gekennzeichnet, daß** neben der ersten Klemmfläche (32) eine zweite Klemmfläche (31) an wenigsten einem Endbereich (33) beziehungsweise einer Seite des Klemmkörpers (3) vorgesehen ist.

5. Nutenstein nach einem oder mehreren der vorhergehenden Ansprüche, **dadurch gekennzeichnet, daß** der Klemmkörper (3) länglich ausgebildet ist, in seinem Mittelbereich (30) sich der Befestigungsschaft (10) anschließt und zwei Endbereiche (33) des Klemmkörpers (3) vorgesehen sind und zumindest ein Endbereich (33) des Klemmkörpers (3) die Klemmflächen (31, 32) aufweist.

6. Nutenstein nach einem oder mehreren der vorhergehenden Ansprüche, **dadurch gekennzeichnet, daß** der Klemmkörper (3) maximal eine Breite besitzt, die der Weite der Schienenöffnung (21) entspricht, und die Länge des Klemmkörpers (3) so bemessen ist, daß der Klemmkörper (3) in der Schiene (2) neben der Schienenöffnung (21) durch Verschwenken des Nutensteins um die Längsachse des Schaftes festklemmbar ist.

7. Nutenstein nach einem oder mehreren der vorhergehenden Ansprüche, **dadurch gekennzeichnet, daß** der Nutenstein (1) allein durch ein Verklemmen beider Klemmflächen (31, 32) in der Profilschiene (2) vorzugsweise an beiden Seitenwandungen (24) festlegbar ist.

8. Nutenstein nach einem oder mehreren der vorhergehenden Ansprüche, **dadurch gekennzeichnet, daß** der Klemmkörper (3) eine dem Schienenboden zugewandte Unterseite (34) besitzt und eine erste Klemmfläche (31) durch eine Abwinkelung der Unterseite und eine zweite Klemmfläche (32) durch eine Abwinkelung der Seitenfläche des Klemmkörpers gewonnen wird.

9. Nutenstein nach einem oder mehreren der vorhergehenden Ansprüche, **dadurch gekennzeichnet, daß** der Klemmkörper (3) quader- oder zylinderförmig ausgebildet ist.

10. Nutenstein nach einem oder mehreren der vorhergehenden **Ansprüche, dadurch gekennzeichnet, daß der Klemmkörper** (3) auf der Unterseite (34) einen Stopfen (8) oder Kugelbolzen trägt, der im eingebauten Zustand des Nutensteins (1) in der Schiene (2) auf dem Schienenboden (20) anliegt.

11. Nutenstein nach einem oder mehreren der vorhergehenden Ansprüche, **dadurch gekennzeichnet, daß** der Befestigungsschaft (13) eine Kappe (7) trägt.

12. Nutenstein nach einem oder mehreren der vorhergehenden Ansprüche, **dadurch gekennzeichnet, daß** Kappe (7) und/oder Stopfen (8) aus einem Elastomer bestehen.

13. Nutenstein nach einem oder mehreren der vorhergehenden Ansprüche, **dadurch gekennzeichnet, daß** der Befestigungsschaft (13) und/oder die Kappe (7) als Zylinder mit einem vieleckigen Querschnitt ausgebildet ist/sind.

14. Nutenstein nach einem oder mehreren der vorhergehenden Ansprüche, **dadurch gekennzeichnet, daß** der Befestigungsschaft (13) zwischen Klemmkörper (3) und dem oberen Ende des Schaftes eine Verjüngung aufweist, deren Breite vorzugsweise der Weite der Schienenöffnung (21) entspricht.

15. Nutenstein nach einem oder mehreren der vorhergehenden Ansprüche, **dadurch gekennzeichnet, daß** in beziehungsweise an dem Befestigungsschaft (10) ein Befestigungsmittel, vorzugsweise eine Bohrung (12) mit einem Innengewinde (13) anordenbar ist.
